# EUROPEAN PATENT SPECIFICATION

(11) **EP 0 413 425 B1**
(45) Date of publication and mention of the grant of the patent: **13.10.1993**
(21) Application number: 90306887.2
(22) Date of filing: 22.06.1990
(51) Int. Cl.: B62D 6/00, B62D 123/00, B62D 101/00

(54) **A vehicle power assisted steering system**
Servolenkung für ein Fahrzeug
Direction assistée pour véhicule

(30) Priority: 15.08.1989 GB 8918578
(43) Date of publication of application: 20.02.1991
(73) Proprietor: TRW CAM GEARS LIMITED, Clevedon Avon BS21 6NJ (GB)
(72) Inventor: Holding, Philip Nicholas, Elton Road, Clevedon, BS21 7RF (GB)
(74) Representative: Walters, Frederick James

(56) References cited:
- EP-A- 0 038 542
- EP-A- 0 189 965
- EP-A- 0 336 553
- WO-A-89/10289
- DE-A- 2 836 926
- DE-A- 3 835 774
- GB-A- 2 194 494

## Description

### TECHNICAL FIELD & BACKGROUND ART

The present invention relates to a vehicle power assisted steering system, more particularly to such a system of the type known as speed proportional whereby the power assistance which is provided decreases as vehicle speed increases and conversely. Systems of the aforementioned type are known as comprising an hydraulic pump having a constant volume output which communicates with an open centre power assistance valve that is adjustable from a neutral condition in response to a steering input torque during a steering manoeuvre to control fluid flow from the pump to opposed chambers of a ram which provides power assistance to assist the manoeuvre. The power assistance valve has valve members relative displacement (typically rotational displacement) between which from the neutral condition and in response to a steering input torque directs hydraulic fluid to actuate the ram for power assistance. In the neutral condition of the open centre power assistance valve, the valve members provide inter-communication between the pump, the chambers of the ram and the reservoir and these valve members are biassed to the neutral condition by a biassing means. In the case of relatively rotational valve members the biassing means is usually either or both of a torsion rod or C-spring component which reacts between the valve members, for example in the manner disclosed in our British Patent Specification No. 2, 165, 502. Where the biassing means is both a torsion rod and a C-spring component it is recognised that the torsion rod provides the predominant biassing effect in response to relatively large angles of rotational displacement between the valve members from their neutral condition while the C-spring component provides the predominant biassing effect for relatively small angles of displacement between the valve members from their neutral condition so that the C-spring component mainly serves to give a positive centring or pre-load which efficiently returns the valve members to their neutral condition following a steering manoeuvre. With the aforementioned biassing means on the valve members, to achieve actuation of the power assistance valve and provide power assistance, it is necessary for the valve members to be displaced from their neutral condition by the application of a steering input torque which overcomes the pre-load of the biassing means.

For the purpose of providing speed proportional power assisted steering with the system as discussed above, it has hitherto been proposed, for example in our British Patent Specification No. 1,293, 192, to provide a by-pass valve which communicates between the pump outlet and a fluid reservoir and which is responsive to vehicle speed so that the by-pass valve increasingly opens communication between the pump outlet and the reservoir as vehicle speed increases and conversely. By this arrangement the hydraulic fluid pressure differential between the pump outlet and the reservoir across the open centre power assistance valve decreases as vehicle speed increases; therefore as vehicle speed increases there is an apparent decrease in fluid pressure available to actuate the power assistance ram and thereby the "feel" of the steering becomes heavier during a manoeuvre as the steering approaches what may be regarded as wholly manual steering characteristics. With such a speed proportional system, upon displacement of the open centre power assistance valve from its neutral condition in response to a steering input torque, the opposed chambers of the ram are closed from communication with each other while the expanding chamber maintains its communication with the pump outlet and the contracting chamber maintains its communication with the reservoir and in known steering systems it is recognised that this can have serious adverse consequences during normal steering of a vehicle at high speed where the bypass valve is adjusted to a condition in which very little or no hydraulic pressure is available across the power assistance valve to assist in displacement of the ram. During this latter condition if the friction between the road wheels and the road is reduced, for example where the road is covered with oil or ice, a turn of the steering wheel can then cause the wheels to turn faster than is desirable. This has the effect that the steering ram is moved at a speed greater than the system pump can supply the working chamber of the ram which is expanding. The result of this is that cavitation occurs in the chamber and power assistance is temporarily lost. It will of course be appreciated that under normal road conditions this problem does not arise.. It is an object of the present invention to provide a vehicle power assisted steering system of the speed proportional type and which alleviates the problem discussed above. The Specification of DE-A-3835774 discloses a steering system of the type generally discussed above and according to the preamble of claim 1, having a by-pass line communicating between the pump outlet and a fluid reservoir and in which a pressure dependent control means is provided in the by-pass line to control the flow therethrough in dependence on a sensed pressure.

### STATEMENT OF INVENTION & ADVANTAGES

A vehicle power assisted steering system comprises an hydraulic pump having a constant volume output; an open centre power assistance valve communicating with said output and which is adjustable from a neutral condition in response to a steering input torque during a steering manoeuvre to control fluid flow from the pump to opposed chambers of a ram providing power assistance to assist said manoeuvre; a by-pass line communicating between the pump outlet and a fluid reservoir; a by-pass valve in the by-pass line and responsive to vehicle speed so that the by-pass valve is controlled to increasingly open communication between the pump outlet and the reservoir as vehicle speed increases and to decrease said communication as vehicle speed decreases; the power assistance valve comprising valve members relative displacement between which from the neutral condition and in response to a steering input torque directs hydraulic fluid to actuate the ram for power assistance, said valve members in the neutral condition providing inter-communication between the pump, the chambers and the reservoir; said valve members being biassed to the neutral condition by biassing means which provides a pre-load that requires a valve actuating steering input torque to cause displacement of the power assistance valve from its neutral condition; pressure dependent control means controlling the flow in the by-pass line in dependence on a sensed pressure, characterised in that said sensed pressure is a pressure differential in a flow or return conduit between the open centre power assistance valve and the ram providing power assistance.

Preferably a restrictor is located in the said flow or return conduit to provide the differential pressure.

The pressure dependent control means may comprise a pressure sensor for sensing the pressure differential, the signal from the sensor being supplied to a controller of the by-pass valve for influencing the operation of the by-pass valve in dependence on the sensed pressure.

Alternatively, the pressure dependent control means may comprise an hydraulically actuated control valve in the by-pass line to which the pressure differential is fed and which controls the flow of fluid through the by-pass line in dependence thereon.

The hydraulically actuated control valve may comprise a shuttle type valve including a dumbbell shaped piston to opposite ends of which the differential pressure is supplied, the stem part of the dumbbell providing communication between inlet and outlet ports for the by-pass line, the ports being closed by the larger ends of the piston when it moves from a central position.

Preferably the by-pass line provides communication directly from the pump outlet to the fluid reservoir.

The differential pressure provides an indication of the flow situation of the fluid entering or leaving the ram chamber. When this pressure indicates an abnormal flow which would cause cavitation in the ram chambers and thus complete temporary loss of power assistance, the by-pass flow can be reduced or shut off, thus restoring the necessary fluid flow to the ram system.

### DRAWINGS

A vehicle power assisted steering system constructed in accordance with the present invention will now be described, by way of example only, with reference to the accompanying illustrative drawings in which:
Figure 1 is a diagrammatic illustration of the general arrangement for a known power assisted steering system;
Figure 2 is a longitudinal section through a typical open centre power assistance valve incorporated in the system of Figure 1;
Figure 3 is a diagrammatic representation of the arrangement of a pressure sensor in accordance with the system of the present invention;
Figure 4 is a diagrammatic representation of the arrangement of a control valve in accordance with a modification of the system shown in Figure 3, and
Figure 5 is a diagrammatic section through the control valve shown in Figure 4.

### DETAILED DESCRIPTION OF THE DRAWINGS

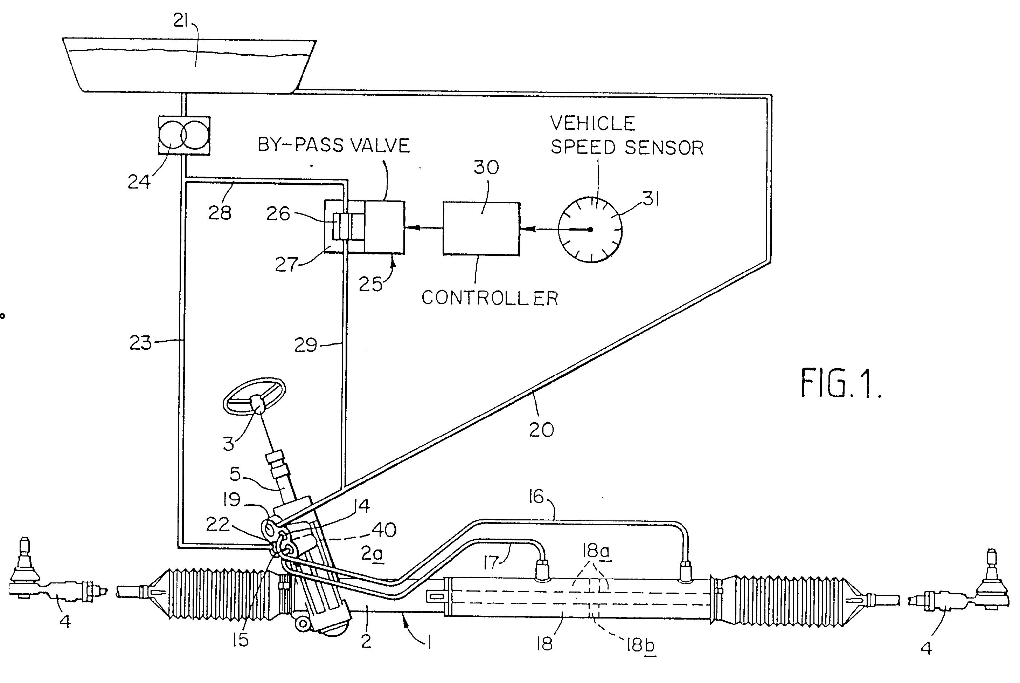

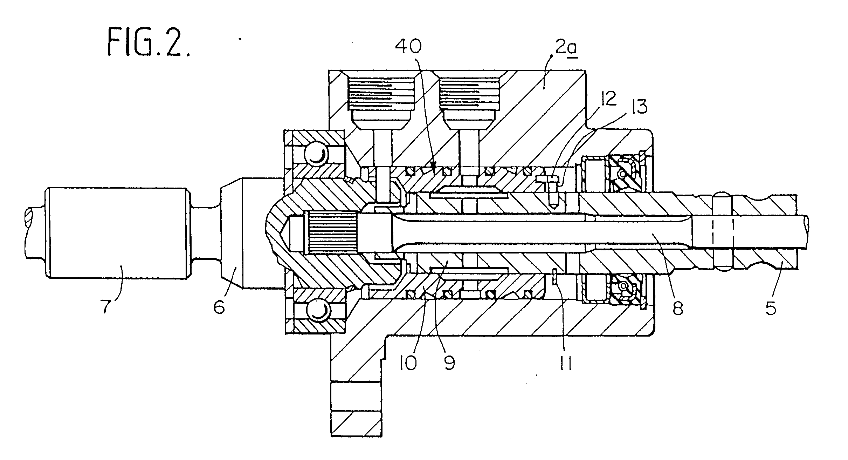

The known power assisted steering system shown in Figure 1 includes a conventional rack and pinion, ram assisted type steering gear 1, the essential components, structure and basic operation of which will be well known to those familiar with the present art. More particularly, the gear 1 has a rack bar which is longitudinally displaceable in a housing 2. Within an extension 2a of the housing is rotatably mounted a pinion 7 which engages with the rack teeth so that rotation of the pinion by the steering wheel 3 and in response to a steering input torque displaces the rack bar longitudinally to effect a steering manoeuvre through conventional steering linkages 4. Within the housing extension 2a is provided a rotary type open centre power assistance valve 40 (as shown in Figure 2), the structure and operation of which is fully discussed in our British Patent Specification No. 2, 165,502. Basically however the power assistance valve has a steering input shaft 5 coupled to the steering wheel 3. The shaft 5 is co-axially coupled to a shaft 6 of the pinion 7 through a torsion bar 8 so that the shafts 5 and 6 are capable of restricted rotation relative to each other. The input shaft 5 includes a valve rotor 9 which is received within a valve sleeve 10 rotatable within the shaft 6. The torsion bar 8 rotationally biases the valve members 9 and 10 relative to each other and to a neutral condition of the open centre valve. Mounted on the input shaft 5 is a C-shaped spring 11, the mouth of which reacts between pegs 12 and 13 on the valve sleeve 10 and valve rotor 9 respectively so that when the valve rotor and valve sleeve are displaced from their neutral condition, the mouth of the C-shaped spring 11 opens and the reaction of the spring provides a biassing force additional to that of the torsion bar 8 to restore the rotary valve to its neutral condition. The biassing force provided by the torsion bar tends to predominate for relatively large angular displacements between the valve rotor and sleeve from the neutral condition while the biassing force provided by the C-spring 11 tends to predominate for relatively small angular displacement between the valve rotor and sleeve from the neutral condition (so that the latter ensures a positive centring of the valve in its neutral condition and, predominantly, the C-spring 11 is preloaded so hat it is this preload which has to be overcome before the rotary valve can be displaced from its neutral condition). The open centre valve operates in conventional manner and, as can be seen from figure 1, has outlet ports 14 and 15 which communicate through conduits 16 and 17 respectively with opposed chambers 18a of a double acting power assistance ram 18b mounted within a ram chamber section 18 of the rack bar housing. The ram 18b is coupled to the rack bar in known manner so that its actuation will assist in longitudinal displacement of the rack bar. The open centre valve also has an exhaust port 19 which communicates by way of a conduit 20 with a hydraulic fluid reservoir 21 and an inlet port 22 which communicates by way of a conduit 23 with the outlet of a constant volume output pump 24 which draws hydraulic fluid from the reservoir 21.

In its open centre neutral condition, the power assistance valve 40 provides inter-communication between the output from the pump 24, the two opposed chambers 18a of the power assistance ram and the reservoir 21 so that the system is of the open centre/open return type and hydraulic fluid can circulate freely from the pump to the reservoir and between the chambers 18a. When a steering input torque is applied to the steering wheel 3 during a steering manoeuvre and which is adequate to rotationally displace the valve rotor 9 relative to the valve sleeve 10 against the pre-load provided by the biassing spring 11 (and to a lesser extent by the torsion bar 8) so that the power assistance valve is displaced from its neutral condition, fluid flow is directed from the pump output to one (expanding) chamber 18a of the power assistance ram while that chamber of the ram is closed to communication with the reservoir 21 and the other (contracting) chamber 18a of the ram maintains its communication with the reservoir 21 but is closed to communication with the expanding chamber of the ram. Accordingly the ram is displaced by fluid pressure in its expanding chamber to assist in longitudinal displacement of the rack bar in a direction consistent with that intended by rotation of the steering wheel 3. For standard power steering which is not varied in proportion to vehicle speed, the power assistance which is provided will, substantially, be constant for any steering manoeuvre irrespective of vehicle speed an when the steering input torque which is applied is sufficient to displace the open centre valve from its neutral condition.

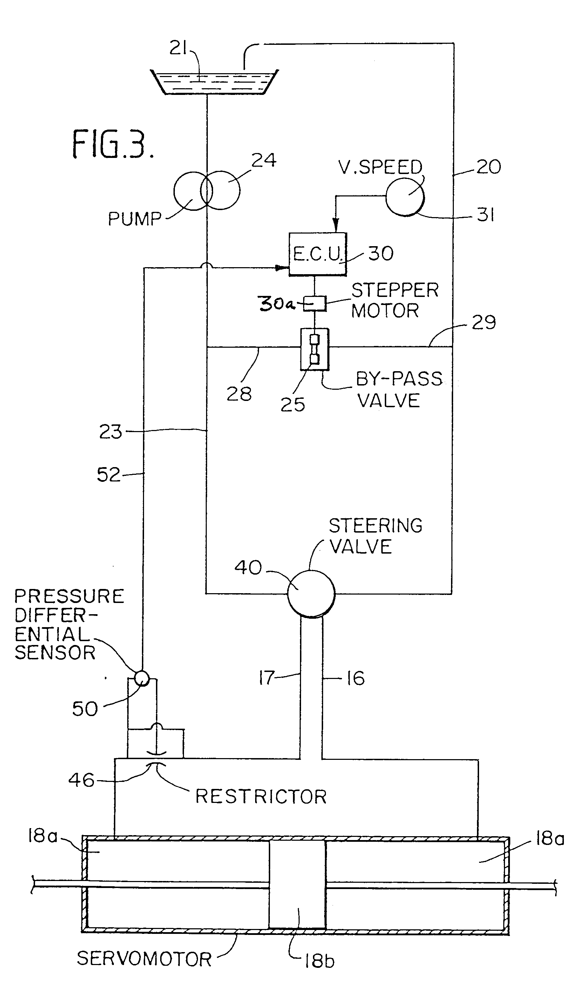

For a speed proportional steering system, a by-pass valve 25 is provided which opens and closes communication directly between the pump output 24 and the reservoir 21, conveniently being connected in parallel with the open centre power assistance valve 40. The by-pass valve is a simple spool valve comprising a spool 26 which is axially displaceable in a spool housing 27 to control communication between a conduit 28 from the output of the pump 24 and a conduit 29 which communicates with the conduit 20 and therethrough with the reservoir 21. The spool 26 is axially adjusted by a controller 30 and in response to variations in vehicle speed from a vehicle speed sensor indicated at 31. The controller 30 and sensor 31 may be of a mechanical, electrical/electronic or fluid pressure operated kind as is well known in the art, a typical example of which is the centrifugal type controller which is fully discussed in our British Patent No. 1,293,192. The spool 26 is adjusted axially by the controller and in response to variations in vehicle speed from a condition when the vehicle is stationary where the conduit 28 is closed to communication with the conduit 29 as shown in figures 1 and 3 to a condition when the vehicle is travelling at high speed (say in excess of 96 kph) where the conduit 28 is fully open to communication with he conduit 29. It will be appreciated that the spool 26 may be displaced progressively between the aforementioned conditions while the opening and closing of communication between the conduits 28 and 29 ( and thereby the proportion of fluid flow from the pump 24 direct to the reservoir 21 which is permitted by way of the bypass valve) will be determined by appropriate porting of the valve 25 to provide required characteristics for variations in the fluid pressure differential which is developed across the open centre valve 40 between the conduits 23 and 20 as compared with the vehicle speed. When the vehicle is stationary or moving slowly, say at a speed less than 10 kph, the bypass valve closes communication between the conduits 28 and 29 and the full pressure flow from the pump 24 is available to actuate the power assistance ram and provide maximum power assistance when the open centre valve 40 is displaced from its neutral condition. As vehicle speed increases and the by-pass valve 25 progressively opens communication between the conduits 28 and 29, a reducing fluid pressure differential from the pump 24 is available to actual the power assistance ram 18b so that the power assistance which is provided progressively decreases (and thereby a progressively greater input torque has to be applied to the steering wheel 3 to effect a steering manoeuvre) and the system approaches the characteristics which would substantially correspond to those of a wholly manual system.

The bypass valve 25 may be such that when the vehicle is at high speed and maximum communication is provided between the conduits 28 and 29, a negligible or zero fluid pressure differential is available from the pump 24 to actuate the power assistance ram and maximum input torque has to be applied to the steering wheel 3 to effect a steering manoeuvre without power assistance (so the system may provide wholly manual steering characteristics). In this latter condition and when the open centre valve is displaced from its neutral condition, The opposed chambers 18a of the ram do not inter-communicate directly through the open centre valve 40 while one of those chambers communicates with the conduit 23 and the other communicates with the conduit 20. As a consequence of this arrangement and where there is no, or negligible, fluid pressure differential provided by the pump 24 across the open centre valve between the conduits 23 and 20, it will be apparent that during a steering manoeuvre and in the absence of power assistance when the open centre valve is displaced from its neutral condition, the power assistance ram 18b is displaced manually upon rotation of the shaft 5 and thereby the expanding pressure chamber 18a of the ram may be subject to cavitation to draw in hydraulic fluid from the conduit 23. This cavitational effect on the ram may result in adverse steering characteristics or feel to the driver. One proposal for overcoming this problem is the subject of our copending British Patent Application No. 8806387, corresponding to EP-A-336553, which is part of prior art under Art. 54(3) EPC.

At the same time, a problem may arise if the system is required to have a pronounced reduction in the power assistance as the vehicle speed increases. The system described so far is satisfactory for normal high speed steering manoeuvres such as are required for negotiating shallow curves during high speed motorway driving. However, with poor road conditions, where the road is covered, for example, with ice or oil, a turn of the steering wheel allows the road wheels to turn faster than is desirable. In this event, the ram 18b will be moved at a greater speed than the amount of fluid available from the pump 24, taking into account the state of the by-pass valve 25, can keep up with. This results in cavitation in the appropriate chamber 18a with consequent temporary loss of power assistance.

To avoid this problem the invention proposes to sense when such a condition is about to or is starting to occur and to take action accordingly.. To this end, one of the conduits 16 or 17 is fitted with a restrictor 46 across which a pressure differential is produced.

In the system shown in figure 3, a sensor 50 is used to sense the pressure differential across the restrictor 46. The sensor 50 provides a signal by way of a line 52 to the controller 30, which is conveniently an electronic control unit, that controls the operation of the by-pass valve 25, conveniently through an electrical stepper motor 30a. In the controller 30, the information provided by the sensor 50 is used to modify the effect of the vehicle speed on the control so that, when the abnormal condition is sensed, it will cause the by-pass valve to close to the extent required to release sufficient fluid into the ram system to avoid the cavitation in the chambers 18a and thus avoid the loss of power assistance.

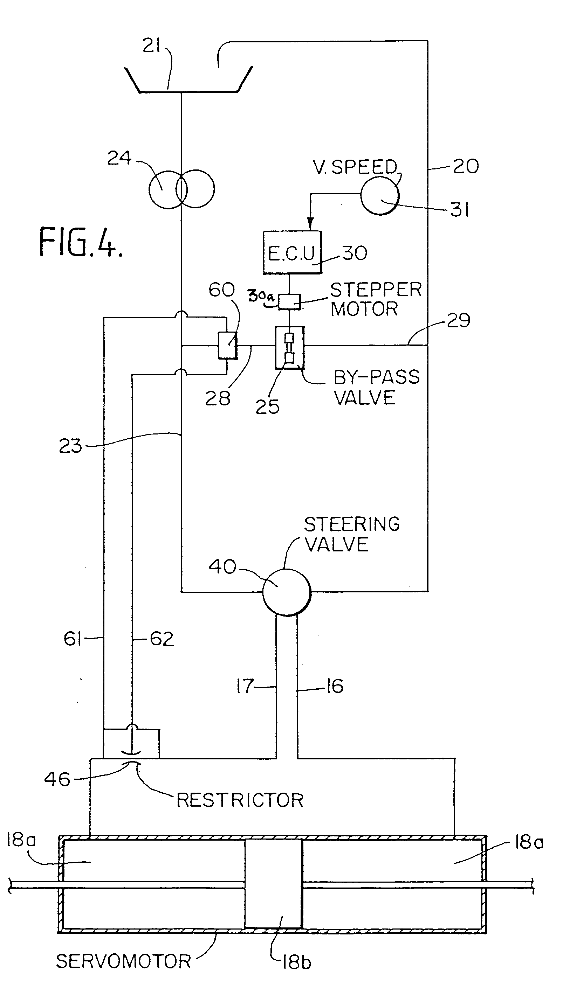

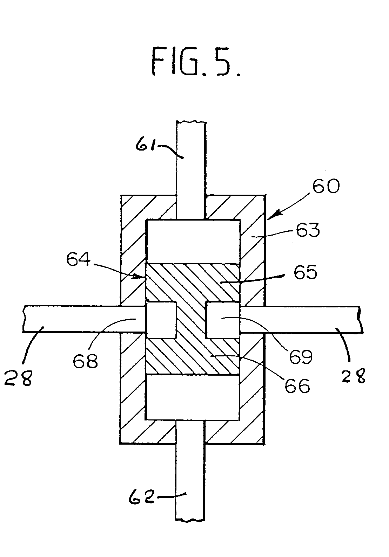

In the modified system shown in figures 4 and 5, an additional, hydraulically actuated, control valve 60 is provided in the by-pass line 28. The pressure differential across the restrictor 46 is transmitted by means of hydraulic lines 61 and 62 to opposite sides of the control valve 60 so that the closing and opening of the control valve 60 is directly dependent on the pressure differential.

The control valve 60 is suitably a small shuttle type valve which is shown diagrammatically in figure 5. It comprises a cylinder 63 containing a piston 64 which has a dumbbell formation with piston heads 65 and 66 connected together by a stem -portion 67. Located in the centre of the cylinder are an inlet port 68 and an outlet port 69 for the by-pass line 28. With the arrangement as shown, with the piston 64 in its central position, the space around the stem portion 67 provides an open communication between the inlet and outlet ports 68 and 69 respectively. When an abnormal condition is sensed, the pressure differential will act on the piston 64 to move it either up or down, depending on which of the chambers 18a is connected by the power assistance valve 40 to the line 23. This movement of the piston 64 will bring one of the piston heads 65 or 66 across the ports 68 and 69 to restrict or cut off the flow in the by-pass line 28. The extent of closure of the valve 60 can be set to ensure that sufficient fluid is released into the the ram system to avoid the cavitation in the chambers 18a and thus avoid the loss of power assistance.

It will of course be appreciated that under normal road conditions no cavitation will occur in the chambers and the system would be so arranged that the differential pressure range encountered in these circumstances will have no effect on the controller.

## Claims

1. A vehicle power assisted steering system comprising an hydraulic pump (24) having a constant volume output; an open centre power assistance valve (40) communicating with said output (24) and which is adjustable from a neutral condition in response to a steering input torque during a steering manoeuvre to control fluid flow from the pump (24) to opposed chambers (18a) of a ram (18b) providing power assistance to assist said manoeuvre; a by-pass line (28, 29) communicating between the pump outlet (24) and a fluid reservoir (21); a by-pass valve (25) in the by-pass line (28, 29) and responsive to vehicle speed (31) so that the by-pass valve (25) is controlled to increasingly open communication between the pump outlet (24) and the reservoir (21) as vehicle speed increases and to decrease said communication as vehicle speed decreases; the power assistance valve (40) comprising valve members (9, 10) relative displacement between which from the neutral condition and in response to a steering input torque directs hydraulic fluid to actuate the ram (18b) for power assistance, said valve members (9, 10) in the neutral condition providing inter-communication between the pump (24), the chambers (18a) and the reservoir (21); said valve members (9, 10) being biassed to the neutral condition by biassing means (8) which provides a pre-load that requires a valve actuating steering input torque to cause displacement of the power assistance valve (40) from its neutral condition; pressure dependent control means (30, 46, 50) controlling the flow in the by-pass line (28, 29) in dependence on a sensed pressure, CHARACTERISED IN THAT said sensed pressure is a pressure differential in a flow or return conduit (16, 17) between the open centre power assistance valve (40) and the ram (18b) providing power assistance.

2. A system as claimed in claim 1 in which a restrictor (46) is located in the said flow or return conduit (17) to provide the differential pressure.

3. A system as claimed in claim 1 or 2 in which the pressure dependent control means comprises a pressure sensor (50) for sensing the pressure differential, the signal from the sensor (50) being supplied to the controller (30) of the by-pass valve (25) for influencing the operation of the by-pass valve (25) in dependence on the sensed pressure.

4. A system as claimed in claim 1 or 2 in which the pressure dependent control means comprises an hydraulically actuated control valve (60) in the by-pass line (28) to which the pressure differential is fed and which controls the flow of fluid through the by-pass line (28) in dependence thereon.

5. A system as claimed in claim 4 in which the hydraulically actuated control valve (60) comprises a shuttle type valve including a dumbbell shaped piston (64) to opposite ends of which the differential pressure is supplied, the stem part of the dumbbell (64) providing communication between inlet and outlet ports (68, 69) for the by-pass line, the ports being closed by the larger ends (66) of the piston (64) when it moves from a central position.

## Patentansprüche

1. Fahrzeug-Servolenksystem mit einer Hydraulikpumpe (24) mit konstantem Fördervolumen; einem Servounterstützungsventil (40) mit offener Mittelstellung, das mit dem Pumpenausgang (24) in Verbindung, steht und in Abhängigkeit von einem Eingangslenkmoment während eines Lenkmanövers aus einem neutralen Zustand verstellbar ist, um einen Fluidstrom von der Pumpe (24) zu entgegengesetzten Kammern (18a) eines Hydraulikzylinders (18b) zu steuern, der Servounterstützung zur Unterstützung des Manövers bereitstellt; einer Bypassleitung (28, 29), die den Pumpenausgang (24) mit einem Vorratsbehälter (21) verbindet; einem in der Bypassleitung (28, 29) angeordneten Bypassventil (25), das auf die Fahrzeuggeschwindigkeit (31) in der Weise anspricht, daß das Bypassventil (25) so gesteuert wird, daß es bei einer Erhöhung der Fahrzeuggeschwindigkeit die Verbindung zwischen dem Pumpenausgang (24) und dem Vorratsbehälter (21) zunehmend öffnet und bei einer Verringerung der Fahrzeuggeschwindigkeit diese Verbindung drosselt; wobei das Servounterstützungsventil (40) Ventilglieder (9, 10) enthält, deren relative Verstellung gegeneinander aus dem neutralen Zustand und in Abhängigkeit von einem Eingangslenkmoment Hydraulikfluid zur Betätigung des Hydraulikzylinders (18b) zur Servounterstützung leitet, wobei die Ventilglieder (9, 10) im neutralen Zustand eine Verbindung zwischen der Pumpe (24), den Kammern (18a) und dem Vorratsbehälter (21) ausbilden; wobei die Ventilglieder (9, 10) in den neutralen Zustand durch Vorspannmittel (8) vorgespannt sind, die eine Vorlast bereitstellen, die zum Verstellen des Servounterstützungsventils (40) aus seinem neutralen Zustand ein Ventilbetätigungs-Eingangslenkmoment erfordert; und mit druckabhängigen Steuermitteln (30, 46, 50), die den Fluß in der Bypassleitung (28, 29) in Abhängigkeit von einem erfaßten Druck steuern, DADURCH GEKENNZEICHNET, DASS der erfaßte Druck ein Differenzdruck in einer Zufuhr- oder Rückführleitung (16, 17) zwischen dem Servounterstützungsventil (40) mit offener Mittelstellung und dem die Servounterstützung bereitstellenden Hydraulikzylinder (18b) ist.

2. System nach Anspruch 1, bei dem eine Drosselstelle (46) in der Zufuhr- oder Rückführleitung (17) angeordnet ist, um den Differenzdruck bereitzustellen.

3. System nach Anspruch 1 oder 2, bei dem das druckabhängige Steuermittel einen Drucksensor (50) zum Erfassen des Differenzdrucks enthält, wobei das Signal vom Sensor (50) zur Steuereinheit (30) des Bypassventils (25) geleitet wird, um den Betrieb des Bypassventils (25) in Abhängigkeit vom erfaßten Druck zu beeinflussen.

4. System nach Anspruch 1 oder 2, bei dem das druckabhängige Steuermittel in der Bypassleitung (28) ein hydraulisch betätigtes Steuerventil (60) enthält, dem der Differenzdruck zugeführt wird und das den Fluidfluß durch die Bypassleitung (28) in Abhängigkeit von diesem steuert.

5. System nach Anspruch 4, bei dem das hydraulisch betätigtc Steuerventil (60) ein Wechselventil mit einem hantelförmigen Kolben (64) enthält, an dessen einander gegenüberliegenden Enden der Differenzdruck angelegt wird, wobei der Schaftabschnitt des Hantelkolbens (64) eine Verbindung zwischen einer Einlaßöffnung (68) und einer Auslaßöffnung (69) für die Bypassleitung ermöglicht, und wobei die Öffnungen von den größeren Enden (66) des Kolbens (64) verschlossen werden, wenn er sich aus einer Mittelstellung bewegt.

## Revendications

1. Système de direction assistée pour véhicule comportant une pompe hydraulique (24) ayant en sortie un volume constant ; une valve d'assistance (40) à centre ouvert communiquant avec ladite sortie (24) et pouvant être réglée depuis un état neutre en réponse à un couple d'entrée de direction durant une manoeuvre de direction pour commander un écoulement de fluide depuis la pompe (24) vers des chambres opposées (18a) d'un vérin (18b) fournissant l'assistance pour aider à ladite manoeuvre ; une conduite de dérivation (28, 29) communiquant entre la sortie (24) de la pompe et un réservoir (21) de fluide ; une valve de dérivation (25) dans la conduite de dérivation (28, 29) et sensible à la vitesse (31) du véhicule de manière que la valve de dérivation (25) soit commandée pour ouvrir de façon croissante la communication entre la sortie (24) de la pompe et le réservoir (21) lorsque la vitesse du véhicule croît et pour diminuer ladite communication lorsque la vitesse du véhicule décroît ; la valve (40) d'assistance comprenant des éléments de valve (9, 10) qui, lorsqu'ils se déplacent l'un par rapport à l'autre à partir de la condition neutre et en réponse à un couple d'entrée de direction, dirigent un fluide hydraulique pour actionner le vérin (18b) pour l'assistance, lesdits éléments de valve (9, 10) dans la condition neutre établissant une intercommunication entre la pompe (24), les chambres (18a) et le réservoir (21) ; lesdits éléments de valve (9, 10) étant rappelés vers la condition neutre par un moyen de rappel (8) qui exerce une précharge nécessitant un couple d'entrée de direction actionnant la valve pour provoquer un déplacement de la valve d'assistance (40) à partir de sa condition neutre ; des moyens (30, 46, 50) de commande, dépendant de la pression, commandant l'écoulement dans la conduite de dérivation (28, 29) en fonction d'une pression détectée, CARACTERISE EN CE QUE ladite pression détectée est une pression différentielle dans un conduit (16, 17) d'écoulement ou de retour entre la valve d'assistance (40) à centre ouvert et le vérin (18b) fournissant l'assistance.

2. Système selon la revendication 1, dans lequel un étrangleur (46) est placé dans ledit conduit (17) d'écoulement ou de retour pour établir la pression différentielle.

3. Système selon la revendication 1 ou 2, dans lequel les moyens de commande dépendant de la pression comprennent un capteur (50) de pression destiné à détecter la pression différentielle, le signal provenant du capteur (50) étant appliqué au dispositif de commande (30) de la valve (25) de dérivation pour agir sur le fonctionnement de la valve (25) de dérivation en fonction de la pression captée.

4. Système selon la revendication 1 ou 2, dans lequel les moyens de commande dépendant de la pression comprennent une valve (60) de commande actionnée hydrauliquement dans la conduite (28) de dérivation à laquelle la pression différentielle est appliquée et qui commande l'écoulement de fluide dans la conduite (28) de dérivation en dépendance de cette pression différentielle.

5. Système selon la revendication 4, dans lequel la valve (60) de commande actionnée hydrauliquement comprend une valve du type à navette comprenant un piston (64) en forme d'haltère à des extrémités opposées duquel la pression différentielle est appliquée, la partie de tige de l'haltère (64) établissant une communication entre des orifices d'entrée et de sortie (68, 69) pour la conduite de dérivation, les orifices étant fermés par les extrémités larges (66) du piston (64) lorsqu'il s'éloigne d'une position centrale.
